# EUROPÄISCHE PATENTANMELDUNG

(11) **EP 1 124 077 A1**
(43) Veröffentlichungstag der Anmeldung: **16.08.2001**
(21) Anmeldenummer: 01103054.1
(22) Anmeldetag: 09.02.2001
(51) Int. Cl.: F16F 9/34, F16F 9/02, A47C 3/30

(54) **Gasfeder**

(30) Priorität: 10.02.2000 DE 10006061; 10.03.2000 DE 10011693; 09.08.2000 EP 00117072
(71) Anmelder: König + Neurath AG, 61184 Karben (DE)
(72) Erfinder: Richter, Stefan, 95491 Ahorntal (DE); Wunderling, Gerhard, 91257 Pegnitz (DE); Sander, Armin, 90763 Fürth (DE); Potrykus, Martin, 96049 Bamberg (DE); Weisser, Frank, 91257 Pegnitz (DE)
(74) Vertreter: Tergau & Pohl Patentanwälte

(57) **Zusammenfassung**

Bei einer Gasfeder (1) ist in einem mit einem Druckmedium (M) gefüllten Gehäuse (2) ein Kolben (6) mit Kolbenstange (14) axial verschiebbar. Durch den Kolben (6) voneinander getrennte Gehäuseräume (4a,4b) sind mittels einer Ventil-Einrichtung (20) miteinander verbindbar bzw. voneinander trennbar. Die Ventil-Einrichtung (20) weist mindestens zwei Überströmkanäle (30,31) mit unterschiedlicher Drosselwirkung auf, die bei unterschiedlich weitem Einschieben eines Ventilstiftes (22) gemeinsam oder nacheinander zur Wirkung kommen. Die insbesondere blockirbare Gasfeder (1) eignet sich besonders als Federelement zur Höhenverstellung eines Stuhls (40) und/oder zur Neigungsverstellung dessen Rückenlehnen-Sitz-Einheit.

## Beschreibung

Die Erfindung betrifft eine Gasfeder, insbesondere eine blockierbare Gasfeder, mit einem in einem Gehäuse verschiebbaren Kolben, mit dem voneinander getrennte und mit einem Druckmedium gefüllte Gehäuseräume mittels einer Ventil-Einrichtung miteinander verbindbar sind, die einen in einem Ventilkörper verschiebbaren Ventilstift aufweist.

Eine derartige, z. B. aus der DE 195 01 301 A1 oder aus der DE 42 37 495 A1 bekannte Gasfeder wird häufig zur Höhenverstellung eines Stuhl eingesetzt. Darüber hinaus findet eine derartige Gasfeder auch Anwendung als Federelement einer z. B. aus der EP 087 952 A1 bekannten Synchronmechanik zur Neigungsverstellung der Rückenlehne eines Bürostuhls, insbesondere in einer Einheit mit dessen Sitzfläche.

Die Gasfeder weist üblicherweise ein zylinderförmiges Druckgehäuse auf, in dem ein endseitig an einer Kolbenstange gehaltener Kolben axial verschiebbar geführt ist. Beidseitig des Kolbens sind Gehäuseräume oder Arbeitskammern gebildet, die mit einem Druckmedium, z. B. mit mittels eines Gaskissens komprimiertem Öl oder mit unter Druck stehendem Gas, gefüllt sind, und die über eine nachfolgend auch als Ventil bezeichnete Ventil-Einrichtung miteinander in Verbindung stehen. Die Ventil-Einrichtung ist mittels eines Ventilstiftes betätigbar, der in einer ersten Gasfeder-Variante innerhalb einer hohl ausgeführten Kolbenstange verschiebbar angeordnet und zusammen mit dieser nach außerhalb des Druckgehäuses geführt ist. Bei dieser Variante trägt der Kolben den Ventilkörper der Ventil-Einrichtung mit einem direkt in eine der Gehäuseräume bzw. Arbeitskammern mündenden verschließbaren Ventil- oder Überströmkanal.

In einer zweiten Gasfeder-Variante ist der Ventilstift auf der der Kolbenstangendurchführung gegenüberliegenden Stirnseite der Gasfeder nach außerhalb des Druckgehäuses geführt. Bei dieser Variante steht der Überströmkanal mit dem Gehäuseraum über einen Ringraum in Verbindung, der zwischen einem Innenzylinder und einem diesen koaxial umgebenden Außenzylinder des Druckgehäuses gebildet ist.

Die Ventil-Einrichtung wird infolge des in der Gasfeder, d. h. in deren ein- oder doppelzylindrigen Druckgehäuse herrschenden Innendrucks geschlossen. Durch Ausübung einer Druckkraft auf den Ventilstift oder -schaft kann das Ventil gegen den Innendruck geöffnet werden. Dadurch wird die zuvor mittels des Ventils geschlossene Verbindung zwischen den beiden Gehäuseräumen freigegeben mit der Folge, dass durch Betätigung der Kolbenstange der Kolben innerhalb des Gehäuseinnenraums des Druckgehäuses axial verschiebbar ist. Unterbleibt die Ausübung der Druckkraft auf den Ventilstift, so wird das Ventil automatisch geschlossen, wobei die Gasfeder in der jeweiligen Stellung des Kolbens blockiert ist. Durch erneutes Öffnen des Ventils der dann vorgespannten Gasfeder wird der Kolben infolge des Kräfteungleichgewichts innerhalb der beiden Gehäuseräume praktisch ruckartig in die Gleichgewichtsstellung zurück verschoben und kann dort durch Schließen des Ventils erneut fixiert werden.

Insbesondere in Verbindung mit der Synchronmechanik eines Stuhls bedeutet diese Funktionsweise, dass infolge einer Betätigung des Ventils die Rückenlehne und zusammen mit dieser die Sitzfläche durch Gewichtsverlagerung der in dem Stuhl sitzenden Person in eine Neigungsstellung verschwenkt werden kann. Unterbleibt anschließend die Betätigung des Ventils, so wird infolge der Blockierung der Gasfeder die jeweilige Neigungsstellung der Rückenlehnen-Sitzeinheit fixiert. Analog kann mittels einer solchen Gasfeder die Sitzhöhe des Stuhl verstellt werden.

Sowohl aus ergonomischen Gründen als auch hinsichtlich einer vorteilhaften Bedienbarkeit ist es wünschenswert, dass bei geöffnetem Ventil der Gasfeder die Reibung möglichst gering ist, damit die Höhenverstellung und/oder Synchronmechanik des Stuhls bei entriegelter Gasfeder in beiden Richtungen relativ leichtgängig ist. Eine geringe Reibung hat jedoch zur Folge, dass bei geneigter Rückenlehne und blockierter Gasfeder ein Öffnen des Ventils eine quasi explosionsartige Rückstellung der infolge der Neigungsstellung der Rückenlehne vorgespannten Gasfeder bewirkt. Dies ist insbesondere dann kritisch, wenn die auf dem Stuhl sitzende Person ohne Rückenkontakt mit der Rückenlehne nach vorne geneigt ist oder den Stuhl vor dem Öffnen des Ventils verlassen hat, da dann die für eine funktionsfähige Synchronmechanik erforderliche große Rückstellkraft der Gasfeder beim Öffnen des Ventils ein unerwünscht heftiges Zurückstellen der Rückenlehne in die Ausgangsposition bzw. ein Abheben des Stuhls vom Boden bewirken kann. Dieser Effekt ist auch bei der Höhenverstellung eines Stuhls unerwünscht.

Der Erfindung liegt daher die Aufgabe zugrunde, eine Gasfeder, insbesondere eine blockierbare Gasfeder anzugeben, bei der die Geschwindigkeit der Kolbenbewegung und damit die Ausfahrgeschwindigkeit der Kolbenstange beeinflußbar ist. Insbesondere soll sich die Gasfeder bei geöffnetem Ventil auch dann relativ langsam entspannen, wenn im entriegelten Zustand eine ausreichende Leichtgängigkeit gegeben ist.

Diese Aufgabe wird erfindungsgemäß gelöst durch die Merkmale des Anspruchs 1. Dazu können mindestens zwei Überströmkanäle, mittels derer die beiden durch den Kolben voneinander getrennten Gehäuseräume miteinander verbunden werden, gleichzeitig oder nacheinander sowie einzeln geöffnet oder geschlossen werden. Hierdurch wird in Stufen mit entsprechenden Übergangsbereichen eine Änderung der Drosselung oder Drosselwirkung des durch die Ventil-Einrichtung strömenden Druckmediums, z. B. Gas und/oder Hydraulikflüssigkeit, erreicht.

In vorteilhafter Ausgestaltung weist der Ventilkörper einen ersten Überström- oder Verbindungskanal und einen in Offenstellung des Ventils freigegebenen zweiten Überström- bzw. Verbindungskanals auf, wobei der beim Öffnen des Ventils zunächst freigegebene erste Überströmkanal einen kleineren Durchlass aufweist als der zweite Überströmkanal. Mit anderen Worten: Der beim Verschieben des Ventilstiftes aus einer Schließstellung der Ventil-Einrichtung über einen ersten Auslöseweg geöffnete erste Überströmkanal weist eine größere Drosselwirkung als der andere (zweite) Überströmkanal auf. Unter Durchlass wird hierbei der sich bei gegebener Druckdifferenz ergebende Volumenstrom verstanden. Je kleiner der Durchlass ist, um so größer ist die Drosselwirkung und um so kleiner ist der Volumenstrom.

Die Erfindung geht dabei von der Überlegung aus, dass die Geschwindigkeit der Kolbenbewegung oder die Ausfahrgeschwindigkeit der Kolbenstange beeinflusst und eine impulsartige Entspannung beim Öffnen des Ventils einer im vorgespannten Zustand blockierten Gasfeder vermieden werden kann, wenn zwischen dem Öffnen des Ventils, d. h. dem Abheben des Ventilstiftes vom Ventilsitz und der maximalen Offenstellung des Ventils ein relativ langer Weg überstrichen wird, während dessen sich die Gasfeder bereits langsam und damit gedämpft entspannt. Dies kann dadurch erreicht werden, dass mit dem Öffnen des Ventils bereits ein bestimmter oder definierter Anteil des Druckfluids oder -mediums über die Verbindung zwischen den Arbeitskammern bzw. Gehäuseräumen strömt. Somit erfolgt bereits eine langsame oder gedämpfte Entspannung der Gasfeder, bevor der Ventilstift den maximalen Strömungsquerschnitt für den Durchfluss des Druckmediums über diese Verbindung freigegeben hat. Dazu sollte der Ventilstift in vom Ventilsitz abgehobener Stellung - und damit während des Öffnens des Ventils - zunächst nur einen relativ kleinen Strömungsquerschnitt freigeben, der kleiner ist als ein zweiter, maximaler Strömungsquerschnitt, der erst bei vollständig geöffnetem Ventil freigegeben ist.

Der gegenüber dem Durchlass des zweiten Überströmkanals - oder maximalen Strömungsquerschnitts - vergleichsweise kleine Durchlass des ersten Überströmkanals - oder entsprechend geringen Strömungsquerschnitts - kann durch ein gezielt eingestelltes Spiel zwischen dem Ventilstift und dem Ventilsitz vorgegeben werden. Aus der Fläche und der Länge des infolge dieses Ventilspiels gebildeten Ringraums ergibt sich dann der Durchlass des ersten Überströmkanal für den Volumenstrom des Druckmediums.

In vorteilhafter Ausgestaltung ist der erste Überströmkanal jedoch eine in den Ventilkörper eingebrachte, auch labyrinthartige Durchgangsöffnung, die zwischen zwei zueinander beabstandeten und den Ventilsitz bildenden Dichtelementen in den Ventilkanal mündet. Somit ist der erste Überströmkanal, d. h. der vergleichsweise kleine Strömungsquerschnitt durch einen zusätzlichen Strömungskanal gebildet, der eine diesen umfassende Wandung durchsetzt und somit den Überströmkanal mit der dem Ventilsitz zugeordneten Gehäusekammer verbindet. Dabei mündet der erste Überströmkanal zweckmäßigerweise in den dem Kolben stirnseitig zugewandten Gehäuseraum oder in einen zwischen dem Ventilstiftkopf und dem Ventilkörper im Bereich des Ventilsitzes gebildeten Ringraum ein. Letztere Variante hat den Vorteil, dass der Ventilkörper hinsichtlich dessen Abmessungen gegenüber einem bisherigen Ventilkörper praktisch unverändert ist, da zur Realisierung des erfindungsgemäßen Funktionsprinzips nach dieser Variante in einen üblichen Ventilkörper lediglich eine Bohrung oder ein entsprechend ausgespartes hülsenartiges Füllstück engebracht werden muß.

Der im Ventilkörper geführte Ventilstift weist vorzugsweise einen sich an einen Einschnürungsbereich endseitig anschließenden zylinderförmigen Ventilkopf oder Dämpfungs-Abschnitt auf, dessen axiale Länge derart bemessen ist, dass dieser beim Öffnen des Ventils den zweiten Überströmkanal noch verschließt, wenn eine dem Einschnürungsbereich zugewandte oder eine am Freiende durch eine konische Aufweitung gebildete Schulterkontur des Ventilkopfes den ersten Überströmkanal bereits freigibt. Dabei ist die axiale Länge des am Ventilstift endseitig vorgesehenen Ventilstiftkopfes größer oder gleich dem axialen Abstand zwischen den Dichtelementen. Der dann in Offenstellung des Ventils zwischen dem Einschnürungsbereich des Ventilstiftes und zumindest einem der beiden Dichtelementen gebildete zweite Überströmkanal ist somit erst dann freigegeben, wenn keines der beiden Dichtelemente am Ventilkopf anliegt oder dieser die beiden Dichtelemente passiert hat. Dadurch ist gewährleistet, dass während des Öffnens des Ventils bis zu dessen vollständiger Offenstellung ein für eine langsame Entspannung der Gasfeder genügend langer Ventilweg oder Ventilhub zur Verfügung steht. Dieser kann durch den Abstand zwischen den beiden Dichtelementen und durch die axiale Länge des Ventilkopfes eingestellt oder bestimmt werden.

Um bei geöffnetem Ventil und somit bei entriegelter Gasfeder eine möglichst geringe Reibung und damit eine gewünschte Leichtgängigkeit der Kolbenbewegung innerhalb des Druckgehäuses sowohl bei entspannter Gasfeder in beiden Axialrichtungen als auch bei sich entspannender Gasfeder zu erreichen, weist das Ventil im Bereich des dem Ventilsitz abgewandten Gehäuseraums mindestens einen relativ großen Durchtrittskanal oder eine Anzahl kleinerer Durchtrittskanäle auf. Bei einem die Leichtgängigkeit der entriegelten Gasfeder begünstigenden Verhältnis zwischen dem Durchlass der Durchtrittskanäle und dem Durchlass des zweiten Überströmkanals oder maximalen Strömungsquerschnitts ist letzterer größer als die Summe der Durchlassquerschnitte der Durchtrittskanäle.

Die zweckmäßigerweise in Form von radial wirkenden Dichtungsringen ausgeführten Dichtelemente liegen vorzugsweise in im Ventilkörper vorgesehenen Ringnuten ein. Durch diese radiale Dichtung ist bei geschlossenem Ventil und auch bei freigegebenem ersten Überströmkanal eine besonders hohe Dichtigkeit zwischen den den Ventilsitz bildenden Dichtringen und dem Ventilstift gewährleistet.

Die mit der Erfindung erzielten Vorteile bestehen insbesondere darin, dass durch Verlängerung des Ventilweges einer blockierbaren Gasfeder unter Freigabe zunächst lediglich eines im Vergleich zum maximalen Ventildurchlass kleinen Durchlass es entlang dieses Ventilweges eine vergleichsweise langsame Entspannung einer zuvor in einem gespannten Zustand verriegelten Gasfeder ermöglicht ist. Eine impulsartige Entspannung der Gasfeder ist somit in einfacher und zuverlässiger Art und Weise vermieden, wobei gleichzeitig eine ausreichende und damit komfortable Leichtgängigkeit gegeben ist.

Eine derartige blockierbare Gasfeder eignet sich daher besonders als Federelement einer zur Neigungsverstellung einer Rückenlehne oder einer Rückenlehnen-Sitz-Einheit vorgesehenen Synchronmechanik eines Stuhls, insbesondere eines Bürostuhls. Sie eignet sich zudem als Feder- und Einstellelement oder als Verstell- und Blockierelement zur Höhenverstellung eines solchen Stuhls. Der dazu vom Gasfederkolben mitbewegte bzw. separat ausgeführte Ventilkörper ist einerseits in besonders einfacher Art und Weise um einen zusätzlichen Überströmoder Verbindungskanal mit vergleichsweise kleinem Durchlass erweiterbar.

Andererseits kann in Verbindung mit dem im Ventilkörper geführten Ventilstift ein für eine langsame Entspannung der Gasfeder erforderlicher vergleichsweise großer Ventilhub zwischen der Schließstellung und der Offenstellung des Ventils vorgegeben werden. Dieser sowie die Auslösegeschwindigkeit kann wiederum unabhängig von der Größe der für eine Leichtgängigkeit der entriegelten Gasfeder erforderlichen Durchlassquerschnitte der Hauptverbindung zwischen den beiden durch den Kolben getrennten Gehäuseräumen eingestellt werden. Der Durchlass des ersten Verbindungs- oder Überströmkanals bildet dann eine quasi bereits mit der Ventilbetätigung und noch vor Freigabe des zweiten Überströmkanals und somit der Hauptverbindung wirkende, vergleichsweise kleine Nebenverbindung zwischen den beiden Arbeitskammern oder Gehäuseräumen.

Nachfolgend werden Ausführungsbeispiels der Erfindung anhand einer Zeichnung näher erläutert. Darin zeigen:
- Fig. 1: eine längenverstellbare Gasfeder im Längsschnitt,
- Fig. 2a-c: ausschnittsweise im Längsschnitt eine erste Variante einer erfindungsgemäßen Gasfeder mit über eine Kolbenstange betätigbarem Ventil in drei verschiedenen Ventilstellungen,
- Fig. 3a-c: in einer Darstellung gemäß Fig. 2 eine alternative Ausführungsform der ersten Gasfeder-Variante,
- Fig. 4a-e: ausschnittsweise im Längsschnitt eine gegenüber der Ausführungsform nach Fig. 2 modifizierte Gasfeder in fünf verschiedenen Ventilstellungen,
- Fig. 5a-c: in einer Darstellung gemäß Fig. 4 eine alternative Ausführungsform der Gasfeder-Variante nach Fig. 3 in drei verschiedenen Ventilstellungen,
- Fig. 6: ein Diagramm, das die Ausfahrgeschwindigkeit des Kolbens mit Kolbenstange über dem Auslöseweg der Ventil-Einrichtung zeigt,
- Fig. 7: in einer Schnittdarstellung eine zweite Variante der erfindungsgemäßen Gasfeder, und
- Fig. 8: in einer Seitenansicht die Gasfeder als Federelement eines Bürostuhls.

Einander entsprechende Teile sind in allen Figuren mit den gleichen Bezugszeichen versehen.

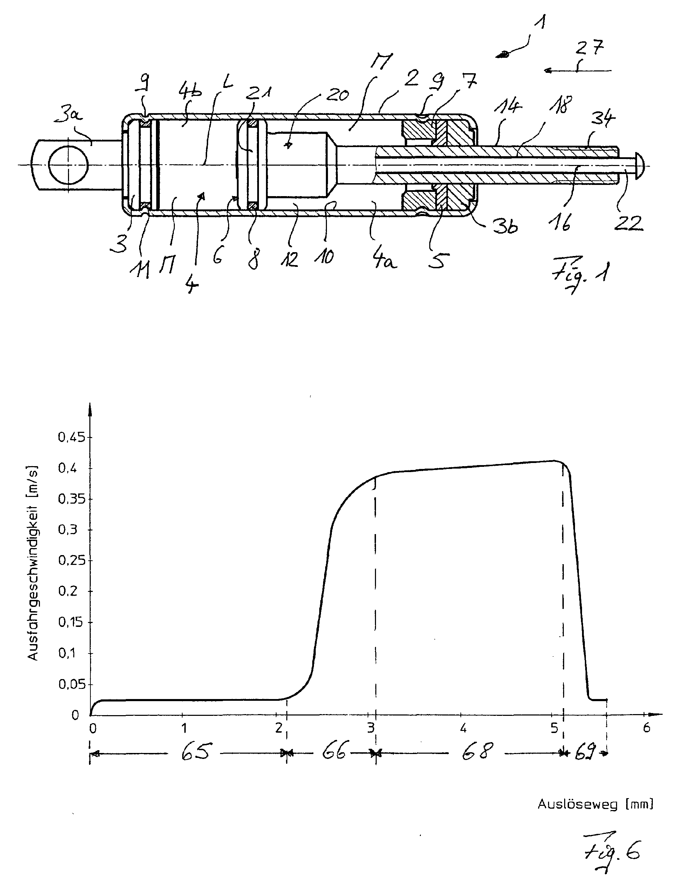

Ein längenverstellbare Gasfeder 1 ist in zwei grundsätzlichen Ausführungen in Praxis in großem Umfang im Einsatz. Bei der der in den Figuren 1 bis 5 dargestellten und nachfolgend näher bezeichneten Version wird eine im Kolben angeordnete Ventil-Einrichtung durch eine in einer hohl ausgebildeten Kolbenstange angeordnete und geführte Betätigungsstange betätigt. Ein Überbrückungskanal der Ventil-Einrichtung kann als Drosselkanal ausgebildet sein, um beim Öffnen des Ventils eine Dämpfung der Einschub- oder Ausschubbewegung der Kolbenstange zu ermöglichen.

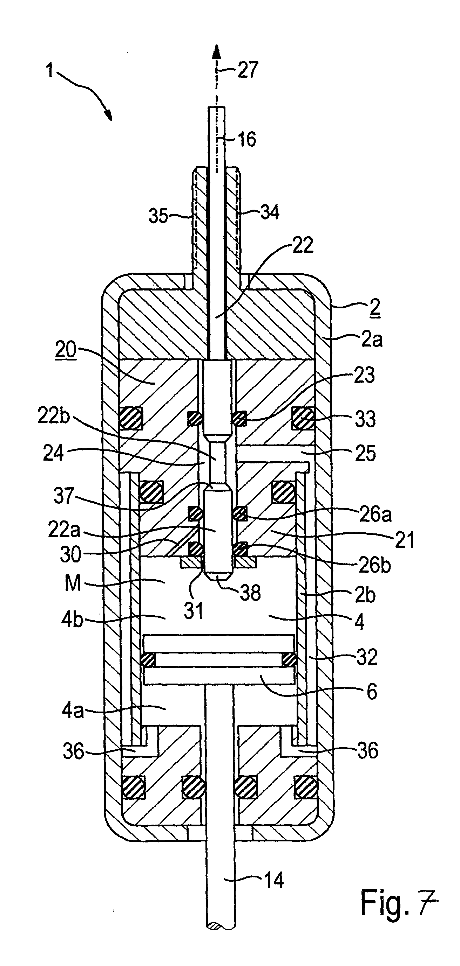

Bei der anderen, ebenfalls nachfolgend näher bezeichnenten und beschriebenen Version gemäß Fig. 7 ist eine Ventil-Einrichtung am dem Austritt einer Kolbenstange entgegengesetzten Ende eines Gehäuses angebracht. Die Verbindung von zwei durch einen Kolben voneinander getrennten Gehäuseräumen erfolgt über die Ventil-Einrichtung und einen zwischen einem Außenrohr und einem Innenrohr des Gehäuses ausgebildeten Ringkanal. Bei diesen längenverstellbaren Gasfedern richtet sich die Ausfahr- bzw. Einschubgeschwindigkeit aufgrund der Konstanz der Drosselbeiwerte der Ventil-Einrichtung primär nach der Differenz der Kräfte, die bei geöffneter Ventil-Einrichtung einerseits am Kolben in Ausschubrichtung und andererseits an der Kolbenstange aufgrund der äußeren Belastung in Einschubrichtung wirken.

Die in Fig. 1 dargestellte Gasfeder 1 weist ein im wesentliches zylindrisches Gehäuse oder Druckgehäuse 2 auf, das an einem Ende mittels eines Bodens 3 verschlossen ist, an dem ein als sogenanntes Auge ausgebildetes Befestigungselement 3a angebracht ist. Am anderen Ende ist das Gehäuse 2 mittels einer ringzylindrischen Führung 3b verschlossen, an deren dem Innenraum 4 des Gehäuses 2 zugewandten Seite ein Dichtungsring 5 anliegt. Der Innenraum 4 ist von einem Kolben 6 in zwei Arbeitskammern oder Gehäuseräume 4a und 4b unterteilt. Die beiden Gehäuseräume 4a und 4b sind mit einem hoch komprimierten Druckmedium M, z. B. mit Öl und/oder Gas, gefüllt.

Der Dichtungsring 5 ist mittels eines Halteringes 7 gehalten und gegen die Führung 3b in Richtung der Mittellängsachse L des Gehäuses 2 verspannt. Der Haltering 7 und der Boden 3 werden mittels in das Gehäuse 2 eingedrückter Vertiefungen 9 gehalten. Ein gasdichter Abschluss des Innenraumes 4 des Gehäuses 1 nach außen im Bereich der Innenwand 10 des Gehäuses 2 wird beim Boden 3 durch eine Dichtung 11 und im Bereich der Führung 3b durch den Dichtungsring 5 bewirkt.

Der Kolben 6 ist mittels eines Dichtungsrings 8 gegen die Gehäuseinnenwand 10 des Druckgehäuses 2 abgedichtet und bildet über einen Teil seiner axialen Länge innerhalb des Gehäuseraums 4a mit der Gehäuseinnenwand 10 einen Ringraum 12. Der Kolben 6 ist an einem Ende einer Kolbenstange 14 gehalten, die innerhalb des Gehäuseraums 4a koaxial zur mit der Mittellängsachse L zusammenfallenden Längsachse 16 der Gasfeder 1 verläuft. Die Kolbenstange 14 ist mit deren dem Kolben 6 abgewandten Ende abgedichtet aus dem Druckgehäuse 2 herausgeführt. Dazu liegt der Dichtungsring 5 dicht an der Kolbenstange 14 an, so dass auch in diesem Bereich ein gasdichter Abschluss nach außen gewährleistet ist.

Der Kolben 6 sowie die bei dieser Gasfeder-Variante hohl ausgeführte und dazu einen Hohlraum 18 aufweisende Kolbenstange 14 bilden eine nachfolgend auch als Ventil bezeichnete Ventil-Einrichtung 20 mit einem gleichzeitig als Kolben 6 dienenden Ventilkörper oder Ventilgehäuse 21 sowie mit einem innerhalb des Hohlraums 18 der Kolbenstange 14 axial verschiebbaren und von außen z. B. mittels einer Betätigungsstange 19 betätigbaren Ventilstift 22. Der Ventilstift 22 trägt endseitig einen Ventilstiftkopf 22a, der sich an einen taillierten Stiftabschnitt oder Einschnürungsabschnitt 22b anschließt. Der Ventilstift 22 ist außer- oder oberhalb des Einschnürungsabschnitts 22b mittels eines Dichtungsrings 23 gegen den Hohlraum 18 der Kolbenstange 14 abgedichtet.

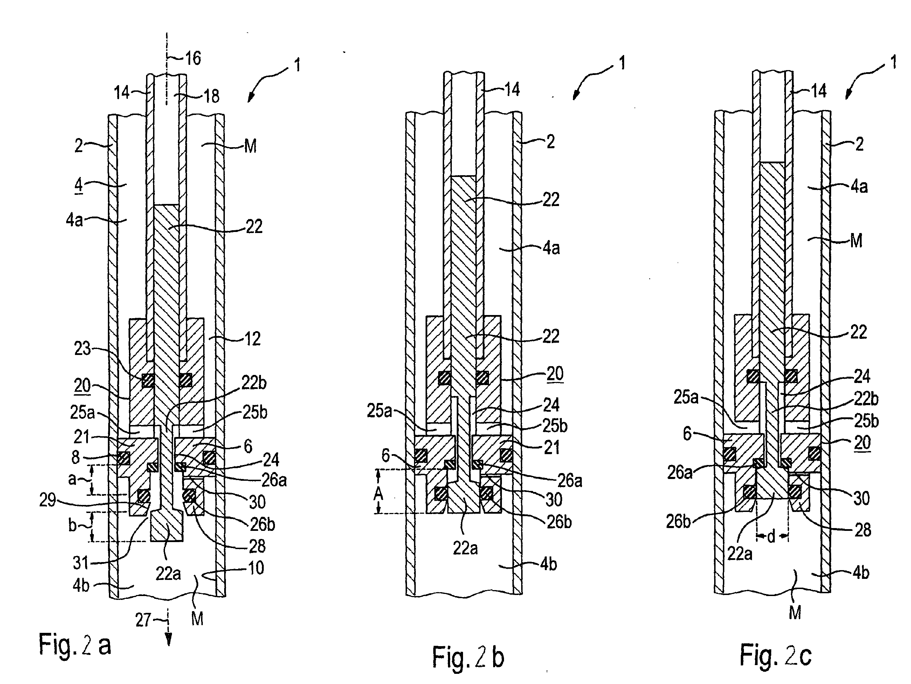

Im Bereich des Einschnürungsabschnitts 22b ist innerhalb des Ventils 20 ein im Querschnitt ringförmiger Ventilkanal 24 gebildet, der über zwei einander gegenüberliegende und im Ausführungsbeispiel quer zur Längsachse 16 verlaufende Durchtrittskanäle 25a und 25b mit dem Ringkanal 12 und somit mit dem Gehäuseraum 4a in Verbindung steht. Dieser wiederum steht mit dem Gehäuseraum 4b über den Ventilkanal 24 und die Durchtrittskanäle 25a und 25b in Verbindung. Dabei erstreckt sich der Ventilkanal 24 über einen im Ventilkörper 21 bzw. im Kolben 6 vorgesehenen und zweckmäßigerweise durch zwei in Längsrichtung 16 zueinander axial beabstandeten Dichtungsringen 26a, 26b gebildeten Ventilsitz hinaus in den Gehäuseraum 4b. Dies ist aus den Darstellungen gemäß den Figuren 2a und 2b vergleichsweise deutlich ersichtlich. Die Dichtungsringe 26a,26b liegen in im Ventilkörper 21 - und damit bei dieser Gasfeder-Variante im Kolben 6 - vorgesehenen, nicht näher bezeichneten Ringnuten ein. Der oder jeder Dichtungsring 26a,26b kann auch in einer im Ventilstift 22 vorgesehenen Nut einliegen. Der Ventilkanal 24 erstreckt sich axial in Längsrichtung 16 des Ventilkörpers 21 und somit in Öffnungsrichtung 27 des Ventils 20.

Der Ventilkanal 24 ist zylinderförmig und von einer an den Kolben 6 bzw. den Ventilkörper 21 angeformten Wandung 28 unter Bildung einer kreisförmigen Mündungsöffnung 29 umfasst. Im Bereich dieser Mündungsöffnung oder Kanalmündung 29 ist der Ventilkanal 24 konisch aufgeweitet, was insbesondere als Einführhilfe für den Ventilstiftkopf 22a beim Schließen des Ventils 20 vorteilhaft ist.

Während bei der in Fig. 2c dargestellten geschlossenen Stellung des Ventils 20 der Ventilstiftkopf 22a an beiden den Ventilsitz bildenden Dichtungsringen 26a, 26b anliegt, ist in der in Fig. 2b dargestellten Ventilstellung der Ventilstiftkopf 22a lediglich bereits vom Dichtungsring 26a abgehoben, liegt jedoch noch innerhalb des Ventilkanals 24 am zweiten Dichtungsring 26b des Ventilsitzes an. Um bei dieser Ventilstellung, d. h. beim Öffnen oder während des Öffnens des Ventils 20, jedoch vor der in Fig. 2a gezeigten vollständigen oder maximalen Offenstellung des Ventils 20 bereits eine langsame Entspannung der Gasfeder 1 zu erreichen, wird zunächst lediglich ein erster Verbindungs- oder Überströmkanal 30 mit einem vergleichsweise kleinen Durchlass und somit mit vergleichsweise großer Drosselwirkung für das zwischen den Arbeitskammern bzw. Gehäuseräumen 4a,4b strömende Medium M freigegeben.

Zur Bildung dieses kleinen Durchlasses oder Strömungsquerschnitts und damit einer relativ großen Drosselwirkung ist eine gerade, schräg oder labyrinthartig verlaufende Querbohrung im Ventilkörper 21 als (erster) Überströmkanal 30 gebildet, wobei ein möglichst kurzer und geradliniger Kanalverlauf allein aus fertigungstechnischen Gründen von Vorteil ist. Der Überströmkanal 30 ist durch den Ventilkörper 21 hindurch geführt und mündet zwischen den beiden den Ventilsitz bildenden Dichtungsringen 26a und 26b in den Ventilkanal 24 ein. Die Größe des durch den ersten Überströmkanal 30 gebildeten Durchlasses bestimmt den bei gegebener Druckdifferenz sich ergebenden Volumenstrom zwischen den beiden Gehäuseräumen 4a und 4b.

Je kleiner der Durchlass des ersten Verbindungskanals 30 ist, um so größer ist die Drosselung oder Drosselwirkung und um so kleiner ist der Volumenstrom. Dadurch kann der Grad der Entspannung der Gasfeder 1 und damit die Entspannungsgeschwindigkeit bzw. die Ausfahrgeschwindigkeit der Kolbenstange 14 mit dem Kolben 6 eingestellt werden. Somit kann sich die Gasfeder 1 bereits zumindest teilweise entspannen, bevor der Ventilstiftkopf 22a entsprechend der in Fig. 2a gezeigten Ventilstellung des Ventils 20 einen zweiten Überströmkanal 31 mit vergleichsweise kleiner Drosselwirkung freigegeben hat, die im wesentlichen bestimmt ist durch die Durchtrittskanäle 25a,b.

Der Durchlass des zweiten Überströmkanals 31 ist wesentlich größer als der Durchlass des ersten Überströmkanals 30. Dabei ist der Ventilhub zwischen der in Fig. 2c gezeigten Schließstellung und der in Fig. 2a gezeigten Offenstellung des Ventils 20 bestimmt durch den Abstand a zwischen den beiden den Ventilsitz bildenden Dichtungsringen 26a und 26b, wobei dieser Abstand a größer oder gleich der axialen Länge oder Kopflänge b des Ventilstiftkopfes 22a ist.

Der Durchlass der beiden Durchtrittskanäle 25a und 25b ist zweckmäßigerweise derart bemessen, dass der durch diese und durch den Ventilkanal 24 gebildete Gesamtdurchlass größer oder gleich dem Durchlass des maximalen, zweiten Überströmkanals 31 ist. Insgesamt ist der durch die beiden Durchtrittskanäle 25a und 25b bestimmte Gesamtdurchlass derart bemessen, dass bei vollständig geöffnetem Ventil 20 und somit bei entriegelter Gasfeder 1 die Reibung möglichst gering ist.

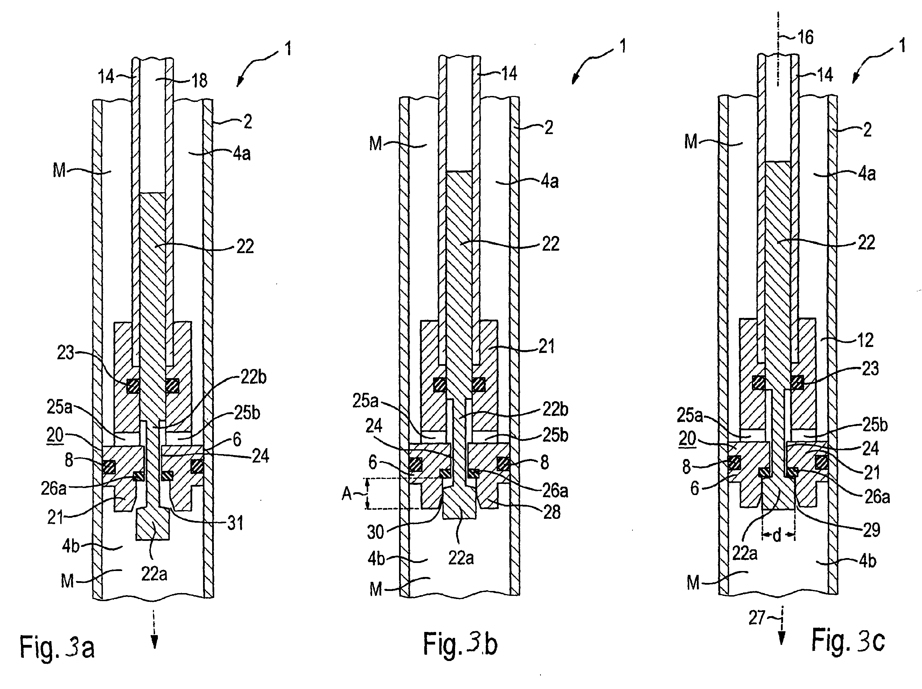

Bei der in den Fig. 3a bis 3c dargestellten Ausführung dieser Gasfeder-Variante ist zur Bildung des vergleichsweise kleinen ersten Verbindungskanals 30 zwischen dem Ventilstiftkopf 22a und dem hier nur durch den einzelnen Dichtungsring 26a gebildeten Ventilsitz ein definiertes Spiel hergestellt. Das den ersten Überströmoder Verbindungskanal 30 darstellende Spiel ist dabei derart bemessen, dass in der in Fig. 3b gezeigten Ventilstellung ein definierter kreisringförmiger Durchlass gebildet ist. Dieser - im Vergleich zum Durchlass des zweiten Überström- bzw. Ventilkanals 31 - kleine Durchlass bedingt eine vergleichsweise große Drosselwirkung, ermöglicht aber bereits einen zumindest geringen Mediumsfluss oder Volumenstrom zwischen den beiden Gehäuseräumen 4a und 4b, bevor das Ventil 20 die in Fig. 3a gezeigte vollständige Offenstellung erreicht hat und der Ventilstiftkopf 22a wiederum den zweiten maximalen Überströmkanal 31 mit vergleichsweise kleiner Drosselwirkung freigibt.

Die gemäß den Fig. 2c und 3c in der geschlossenen Ventilstellung dargestellte blockierte Gasfeder 1 kann sich somit bereits während des Öffnungsvorgangs des Ventils 20 langsam entspannen. Die Zeitspanne, während derer sich die Gasfeder 1 beim Öffnen des Ventils 20 langsam entspannt, hängt vom Ventilhub und damit vom Ventilweg ab, den der Ventilstiftkopf 22a bei gegebener Öffnungsgeschwindigkeit von der Schließstellung bis zur Offenstellung des Ventils 20, d. h. bis zur Freigabe des zweiten Überströmkanals 31 durchläuft. Diese Zeitdauer, während derer sich die Gasfeder 1 zunächst langsam entspannt, kann durch die Kanallänge oder Zylinderhöhe des Ventilkanals 24, die größer oder gleich der Kopflänge b des Ventilstiftkopfes 22a ist, und damit durch die Länge des Ventilweges bestimmt werden. Im Ausführungsbeispiel nach Fig. 3 entspricht die axiale Länge b des Ventilstiftkopfes 22a der Zylinderhöhe des diesen in Schließstellung des Ventils 20 umgebenden Abschnitts A des Ventilkanals 24. Während beim Ausführungsbeispiel nach Fig. 2 dieser Abschnitt A des Ventilkanals 24 die Kopflänge b übersteigt, ist der Durchmesser d dieses Abschnitts A bei beiden Ausführungen gemäß den Fig. 2 und 3 vorzugsweise gleich, zumindest jedoch nur geringfügig kleiner als dessen Zylinderhöhe.

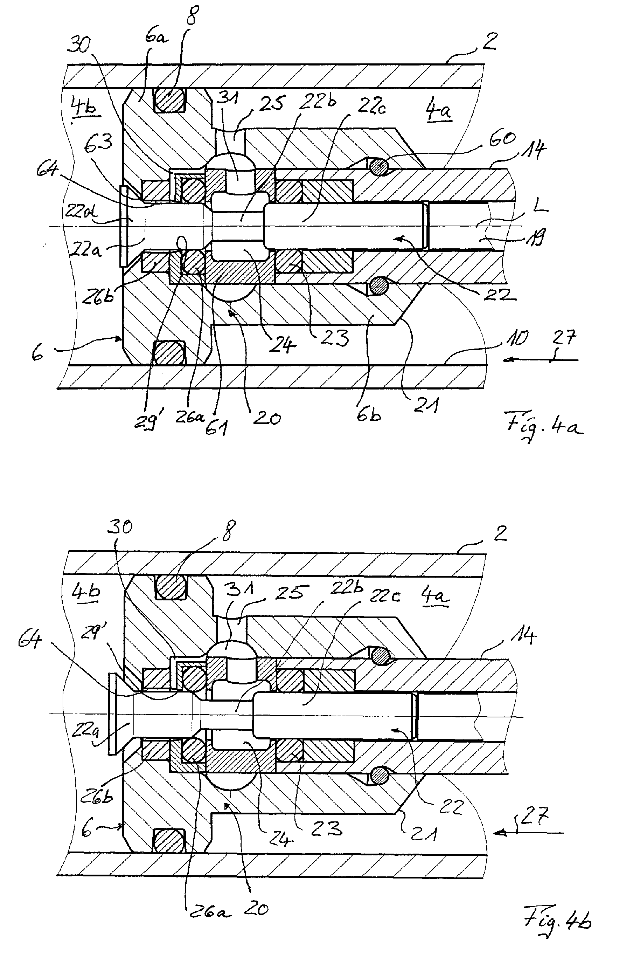

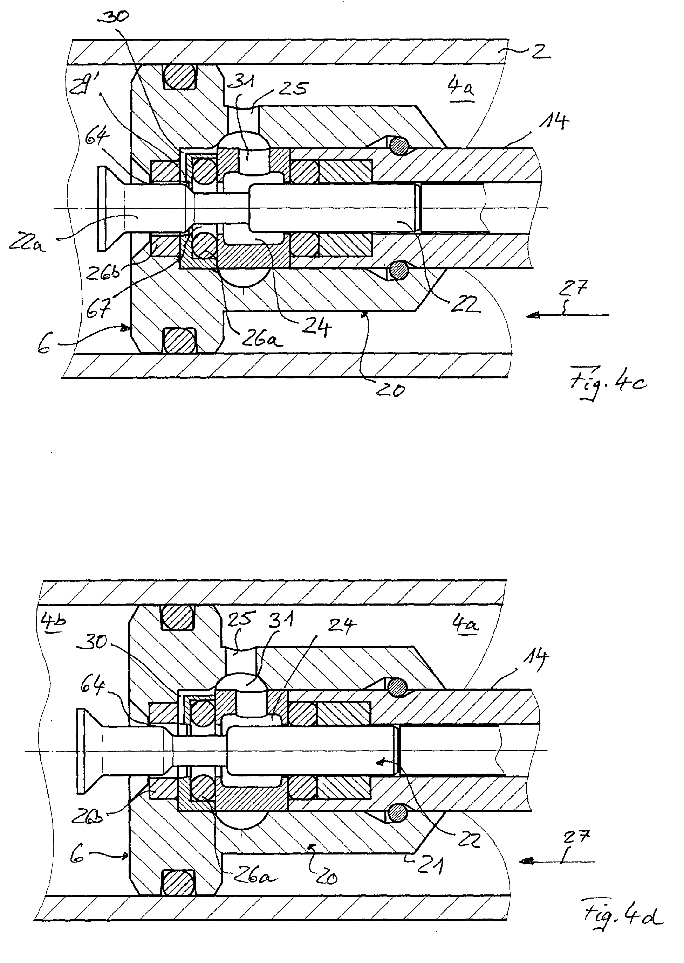

Bei der Ausführungsform der blockierbaren Gasfeder 1 nach Fig. 4 ist der erste Überströmkanal 30 in den Gehäusseraum 4a geführt, während bei der Ausführung nach Fig. 2 dieser Überströmkanal 30 in den anderen Gehäusseraum 4b geführt ist. Dadurch kann der Kolben 6 vorteilhafterweise vergleichsweise klein und hinsichtlich dessen äußeren Abmessungen gegenüber einem herkömmlichen Kolben praktisch unverändert ausgeführt sein. Auch hier ist im Kolben 6 wiederum die Ventil-Einrichtung bzw. das Ventil 20 angeordnet. In der Kolbenstange 14 ist die Betätigungsstange 19 in Richtung der Achse L verschiebbar angeordnet. Mit der Betätigungsstange 19 kann durch deren Eindrücken in die Kolbenstange 14 die Ventil-Einrichtung 20 betätigt werden. An der Kolbenstange 14 befindet sich wiederum ein als Gewinde ausgeführtes Befestigungselement 34 (Fig. 1).

Im Innenraum 4, d.h. in den Gehäuseräumen 4a,4b befindet sich wiederum zumindest teilweise eine Druckgas-Füllung und ggf. Hydraulikflüssigkeit. Wenn der Innenraum 4 zumindest annähernd ausschließlich mit Druckgas gefüllt ist, dann handelt es sich um eine längenverstellbare Gasfeder 1, die auch bei geschlossener Ventil-Einrichtung 20 über Federeigenschaften verfügt. Wenn der Innenraum 4 in einem erheblichen Maße mit Hydraulikflüssigkeit und nur in kleinem Umfang mit Druckgas gefüllt ist, dann handelt es sich um eine hydraulisch blockierbare Gasfeder 1. Zusätzlich zum Druckgas befindet sich im Innenraum 4 zu Schmierungszwecken auch eine kleine Menge Öl, das bei Vorhandensein der erwähnten Hydraulikflüssigkeit durch letztere gebildet wird.

Mittels der Ventil-Einrichtung 20 können die Gehäuseräume 4a,4b miteinander verbunden und voneinander getrennt werden. Bei entsprechend der Darstellung in Fig. 4a geschlossener Ventil-Einrichtung 20 sind diese Gehäuseräume 4a,4b voneinander getrennt. Der Kolben 6 ist wiederum als Ventilgehäuse (Ventilkörper) 21 ausgebildet. Er weist zusätzlich zu einer die Dichtung 8 tragenden und an der Innenwand 10 des Gehäuses 2 geführten Kolbenscheibe 6a einen hohlzylindrischen Ansatz 6b auf, in dem die Kolbenstange 14 mittels eines Klemmringes 60 befestigt ist. Zwischen der Kolbenstange 14 und der Kolbenscheibe 6b befindet sich ein ringförmiges Füllstück 61. In diesem ist - konzentrisch zur Achse L - der Ventil- oder Ringkanal 24 ausgebildet, der mittels des zweiten Überströmkanals 31 mit geringer Drosselwirkung und eines im Ansatz 6b ausgebildeten Durchtritts- oder Verbindungkanals 25 mit dem Gehäuseraum 4a verbunden ist.

Anschließend an das Füllstück 61 ist der Kolben 6, insbesondere die Kolbenscheibe 6a, mit der zum Gehäuseraum 4b führenden Öffnung 29' versehen. In der Öffnung 29', dem Ringkanal 24 und dem anschließenden Bereich der hohl ausgebildeten Kolbenstange 14 ist der Ventilstift 22 angeordnet, dessen Verschiebung in Richtung der Achse L mittels der Betätigungsstange 19 ausgeführt wird. Der Ventilstift 22 weist einen in der Kolbenstange 14 geführten zylindrischen Führungs-Abschnitt 22c auf, der in einer Führungsbüchse 62 geführt ist. Zwischen dieser Führungsbüchse 62 und dem Füllstück 61 - unmittelbar benachbart zum Ringkanal 24 - ist die gegen den zylindrischen Führungs-Abschnitt 22c anliegende O-Ringdichtung 23 angeordnet, die einen gasdichten Abschluss nach außen bewirkt.

An den zylindrischen Führungs-Abschnitt 22c des Ventilstiftes 22 schließt sich der ebenfalls im wesentlichen zylindrischen, nachfolgend auch als Überbrückungs-Abschnitt bezeichnete Einschnürungs-Abschnitt 22b an, der sich bei geschlossener Ventil-Einrichtung 20 - entsprechend Fig. 4a - im Ringkanal 24 befindet. An den Überbrückungs-Abschnitt 22b schließt sich wiederum der ebenfalls zylindrische Ventil- oder Ventilstiftkopf 22a an, der nachfolgend auch als Dämpfungs-Abschnitt bezeichnet wird. Dieser Dämpfungs-Abschnitt 22a befindet sich bei geschlossener Ventil-Einrichtung 20 in der Öffnung 29'. An dem dem Gehäuseraum 4b zugewandten Ende des Ventilstiftes 22 ist an diesem ein sich kegelstumpfförmig erweiternder Ventil-Teller 22d ausgebildet, der eine doppelte Funktion hat. Zum einen verhindert dieser Ventil-Teller 22d, dass der Ventilstift 22 durch den hohen Druck im Innenraum 4 durch die Kolbenstange 14 nach außen herausgedrückt werden kann. Des weiteren dient die Kegelfläche des Ventil-Tellers 22d als Dichtfläche 63.

In der Öffnung 29' des Kolbens 6 ist - anschließend an das Füllstück 61 und unmittelbar benachbart zum Ringkanal 24 - der als O-Ringdichtung ausgeführte Dichtungsring 26a vorgesehen, der gegen den Dämpfungs-Abschnitt 22a dichtend anliegt. Benachbart zum Ventil-Teller 22d ist in der Öffnung 29' wiederum der Dichtungsring (Ventil-Teller-Dichtung) 26b vorgesehen, der bei geschlossener Ventil-Einrichtung 20 dichtend gegen die Dichtfläche 63 des Ventil-Tellers 22d anliegt. Zwischen dieser Dichtung 26b und dem Dämpfungs-Abschnitt 22a ist ein schmaler Ringkanal 64 ausgebildet.

Der Verbindungskanal 25 ist über den ersten Überströmkanal 30 mit hoher Drosselwirkung mit der Öffnung 29' verbunden. Der Überströmkanal 30 mündet zwischen den Dichtungsringen 26a und 26b in die Öffnung 29' ein und ist somit stets mit dem Ringkanal 64 verbunden. Während wiederum der Verbindungskanal 25 und der zweite Überströmkanal 31 einen verhältnismäßig großen Querschnitt aufweisen, durch den Gas und/oder Hydrauliköl verhältnismäßig verlustfrei strömen kann, weist wiederum der erste Überströmkanal 30 einen relativ engen Querschnitt auf, so dass das durch diesen hindurchströmende Medium einer relativ starken Drosselung unterworfen wird.

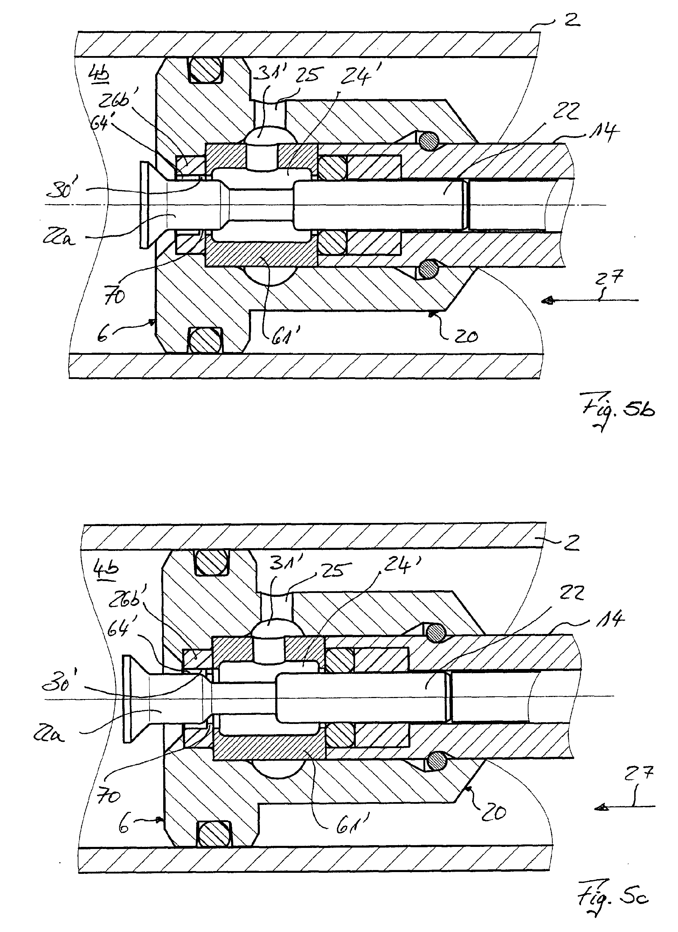

Die Wirkungsweise wird nachfolgend anhand der Figuren 4b bis 4e und des in Fig. 6 dargestellten Diagramms erläutert. Die Figuren 4b bis 4c zeigen unterschiedliche Einschub-Stellungen des Ventilstiftes 22, während in Fig. 6 über diesem Einschubweg bzw. Auslöseweg des Ventilstiftes 22 die Ausfahrgeschwindigkeit des Kolbens 6 - zusammen mit der Kolbenstange 14 - einer Gasfeder 1 dargestellt ist, die mit dem unter vorgegebenem Druck stehenden Medium M gefüllt ist. Die Ausfahrgeschwindigkeit ist aufgrund der strömungstechnischen Zusammenhänge ein Maß für die Drosselung in der Ventil-Einrichtung 20 für die unterschiedlichen Einschubstellungen bzw. Auslösewege des Ventilstiftes 22.

Bei der Darstellung in Fig. 4b ist der Ventilstift 22 um einen ersten Auslöseweg 65 in Einschub- oder Öffnungsrichtung 27 eingeschoben, wobei nur der Dichtungsring 26b von der Dichtfläche 63 abgehoben wird. Der Dichtungsring 26a liegt nach wie vor am Dämpfungs-Abschnitt 22a an. Druckmedium M kann aus dem in Fig. 4 rechten Gehäuseraum 4a nur über den Verbindungskanal 25 und den ersten Überströmkanal 30 sowie den Ringkanal 63 unter entsprechend hoher Drosselung in den linken Gehäuseraum 4b strömen. Über den Auslöseweg 65 erfolgt also ein langsames Ausfahren des Kolbens 6 mit der Kolbenstange 14.

Bei einem weiteren Eindrücken des Ventilstiftes 22 in Einschubrichtung 27 um einen zweiten Auslöseweg 66 hebt gemäß der Darstellung in Fig. 4c der Dichtungsring 26a von dem Dämpfungs-Abschnitt 22a ab, wodurch ein zusätzlicher Ringspalt 67 gebildet wird. Durch diesen kann Druckmedium M über den Verbindungskanal 25 und den zweiten Überströmkanal 31 sowie durch den Ringkanal 24 in den Ringkanal 64 strömen. Die Dämpfung nimmt deutlich ab, wodurch die Ausfahrgeschwindigkeit des Kolbens 6 deutlich zunimmt. Durch den zweiten Auslöseweg 66 wird ein Übergangsbereich in der Ausfahrgeschwindigkeit definiert. Über den Auslöseweg 66 steigt die Ausfahrgeschwindigkeit des Kolbens 6 steil an, d. h. die Dämpfung sinkt stark ab, weil der Querschnitt des Ringspalts 67 stark zunimmt. Dadurch strömt über den ersten Überströmkanal 30 praktisch kein Medium M mehr unter entsprechender Drosselung. Eine geringe Drosselung findet nur noch im unverändert vorhandenen Ringkanal 64 statt.

Beim weiteren Einschieben des Ventilstiftes 22 über einen dritten Auslöseweg 68 entsprechend Fig. 4d kommt der Dämpfungs-Abschnitt 22a des Ventilstiftes 22 aus der Überdeckung mit dem Dichtungsring 26b, so dass der Ringkanal 64 fortlaufend verkürzt wird. Da hierbei, wie auch bereits bei der Position gemäß Fig. 4c, der Dichtungsring 26a in Überdeckung mit dem Überbrückungs-Abschnitt 22b ist, kann das Druckmedium M weitgehend ungedrosselt bis zum Ringkanal 64 strömen, der wiederum in dessen bereits vergleichsweise geringen Drosselwirkung stetig reduziert wird.

Beim maximal möglichen Einschieben des Ventilstiftes 22 in Einschubrichtung 27 um einen vierten Auslöseweg 69 - entsprechend der Darstellung in Fig. 4e - kommt die Dichtung 26b zwar vollständig in Überdeckung mit dem Überbrückungs-Abschnitt 22b, so dass hier praktisch keine Drosselung mehr stattfindet. Allerdings kommt der Dichtungsring 26a zur Anlage am Führungs-Abschnitt 22c des Ventilstiftes 22, so dass hierdurch wiederum der zweite Überströmkanal 31 abgeschlossen wird und Druckmedium M nur noch über den stark drosselnden ersten Überströmkanal 30 strömen kann. Bei diesem Einschieben über den vierten Auslöseweg 69 sinkt die Ausfahrgeschwindigkeit wieder auf den gleichen Wert ab, wie dieser über den ersten Auslöseweg 65 gegeben ist. Die Überströmkanäle 30,31 sind somit funktionell parallel zueinander angeordnet sowie ausgebildet und kommen nacheinander zur Wirkung.

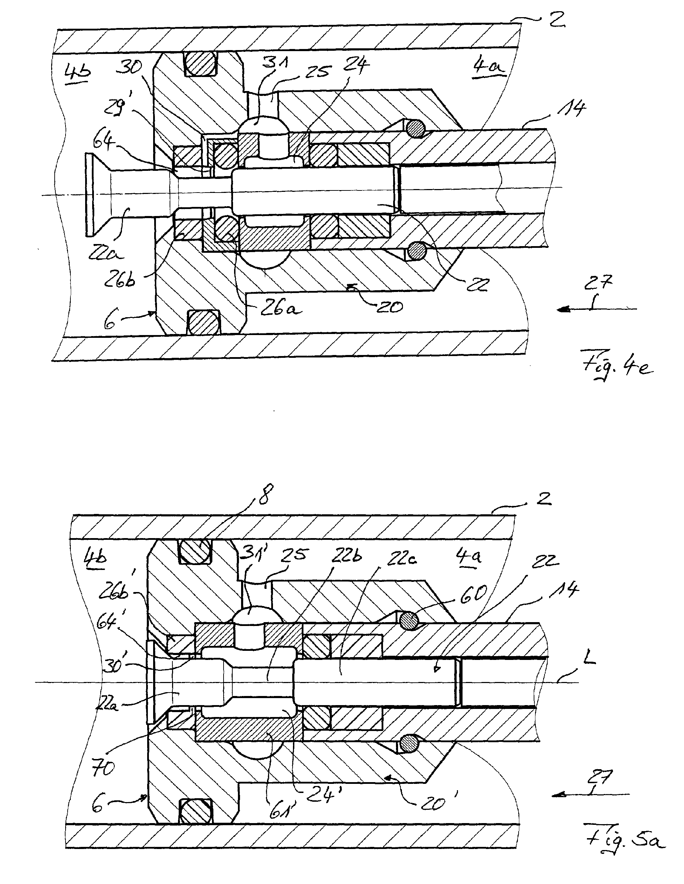

Die Ausführungsform nach den Fig. 5a bis 5c unterscheidet sich von der Ausführungsform nach den Fig. 3a bis 3c praktisch nur konstruktiv, wobei die konstruktive Ausbildung der dort dargestellten Gasfeder 1 derjenigen der Figuren 4a bis 4e entspricht, während die Funktion und die Wirkungsweise derjenigen nach den Figuren 3a bis 3c entspricht. So zweigt der erste Überströmkanal 30' wiederum nicht aus dem Verbindungskanal 25 ab, sondern mündet aus dem Ringkanal 24' des Füllstückes 61' aus. Der erste Überströmkanal 30' ist somit in Reihe mit dem zweiten Überbrückungskanal 31' geschaltet. Der Dichtungsring 26b' weist einen am Dämpfungs-Abschnitt 22a anliegenden Ringbund 70 mit dem als Schlitz in diesem Ringbund 70 ausgebildeten ersten Überströmkanal 30' auf. Dieser mündet in den zwischen dem Abschnitt 22a und der Dichtung 26b' ausgebildeten Ringkanal 64'.

Wird der Ventilstift 22 aus der in Fig. 5a dargestellten Schließstellung der Ventil-Einrichtung 20' in Einschubeinrichtung 27 in die in Fig. 5b dargestellte, teilweise geöffnete Stellung verschoben, so strömt das gesamte Druckmedium M aus dem Gehäuseraum 4a durch den Verbindungskanal 25, den zweiten Überströmkanal 31', den Ringkanal 24', den ersten Überströmkanal 30' und den Ringkanal 64' in den anderen Gehäuseraum 4b. Die Ausfahrgeschwindigkeit des Kolbens 6' mit Kolbenstange 14 entspricht hierbei der jenigen über dem ersten Auslöseweg 65 in Fig. 6. Die Drosselung erfolgt im wesentlichen im ersten Überströmkanal 30'.

Wenn der Ventilstift 22 weiter in Einschubrichtung 27 eingeschoben wird, bis der Überströmkanal 30' gemäß der Darstellung in Fig. 5c in Überdeckung mit dem Überbrückungs-Abschnitt 22b gelangt, dann ist der erste Überströmkanal 30' weitgehend außer Funktion. Das Druckmedium M kann dann weitgehend ungedrosselt aus dem einen Gehäuseraum 4a in den anderen Gehäuseraum 4b strömen, wobei dies etwa der Ausfahrgeschwindigkeit über dem dritten Auslöseweg 68 in Fig. 6 entspricht. Beim Verschieben des Ventilstiftes 22 tritt auch hierbei ein Übergangsbereich auf, der demjenigen über dem zweiten Auslöseweg 66 in Fig. 6 entspricht. Dieser Übergangsbereich mit steilem Anstieg der Ausfahrgeschwindigkeit tritt auf, wenn der Ringspalt 67' beim Einschieben des Ventilstiftes 22 ständig größer wird. Ein vierter Auslöseweg, wie er in Fig. 6 dargestellt ist, ist hierbei ebenfalls realisierbar.

Bei den beschriebenen Ausführungsformen tritt eine vergleichbare Drosselung ein, wenn bei teilweise oder vollständig geöffneter Ventil-Einrichtung 20, 20' die Kolbenstange 14 mit Kolben 6 bzw. 6' in das Gehäuse 2 eingeschoben wird und hierbei das Druckmedium M vom einen Gehäuseraum 4b in den anderen Gehäuseraum 4a strömt.

Bei der in Fig. 7 dargestellten Gasfeder-Variante umfasst die Gasfeder 1 ein doppelzylindriges Druckgehäuse 2 mit einem Außenzylinder 2a und einem von diesem koaxial umgebenen Innenzylinder 2b. Zwischen diesen ist ein Ringkanal 32 als Verbindung zwischen den beiden Arbeitskammern bzw. Gehäuseräumen 4a und 4b gebildet. Dem im Ausführungsbeispiel im Gehäuseraum 4b wiederum axial verschiebbaren Kolben 6 liegt der Ventilkörper 21 gegenüber, der mittels eines Dichtungsrings 33 gegen den Außenzylinder 2a innwandig abgedichtet ist. Der Ventilstift 22 des Ventils 20 ist auf der der Kolbenstange 14 gegenüberliegenden Stirnseite der Gasfeder 1 über einen mit einem Außengewinde 34 versehenen Zylinderschaft 35 nach außerhalb des Druckgehäuses 2 geführt.

Der kolbenrückseitige Gehäuseraum 4a steht über Öffnungen 36 mit dem Ringkanal 32 in Verbindung. Dieser wiederum steht in diesem Ausführungsbeispiel über lediglich einen einzelnen, wiederum in den Ventilkanal 24 mündenden Durchtrittskanal 25 mit dem zweiten Gehäuseraum 4b in Verbindung, wenn das Ventil 20 zumindest teilweise geöffnet ist. Der wiederum mittels der den Ventilsitz bildenden Dichtungsringe 26a und 26b abgedichtete Ventilstiftkopf 22a gibt beim Öffnen des Ventils 20 zunächst ebenfalls nur den ersten Überströmkanal 30 frei, der wiederum zwischen den beiden Dichtungsringen 26a und 26b in den Ventilkanal 24 mündet und diesen mit dem Gehäuseraum 4b verbindet.

Der erste Überströmkanal 30 mit wiederum vergleichsweise kleinem Durchlass ist durch eine vorzugsweise schräg verlaufende Durchgangsbohrung gebildet, die - ausgehend von einem vorzugsweise wiederum näher bei dem oberen Dichtungsring 26a gelegenen Ausgangspunkt zwischen den beiden Dichtungsringen 26a und 26b - bei dieser Variante zweckmäßigerweise zur Stirnseite des Ventilkörpers 21 verläuft.

Erst wenn in vollständiger Offenstellung des Ventils 20 der Ventilstiftkopf 22a beide Dichtungsringe 26a und 26 passiert hat, ist der zweite Überströmkanal 31 mit dem vergleichsweise großen Durchlass freigegeben. In dieser Stellung überdeckt - analog zur Darstellung in Fig. 2a - der Einführungsbereich oder Überbrückungs-Abschnitt 22b den gesamten Ventilsitz und damit beide Dichtungsringe 26a und 26b, zwischen denen und dem Einschnürungsbereich 22b dann ein entsprechend großer Durchlass für das Medium M gegeben ist.

Dagegen überdeckt der Einschnürungsbereich 22b in der nur teilweise geöffneten Ventilstellung - gemäß der Darstellung in Fig. 2b - nur den Bereich des in den Darstellungen oberen Dichtungsrings 26a und den ersten Überströmkanals 30. Der Ventilstiftkopf 22a, der sich von einer am Übergang zum Einschnürungsbereich 22b ergebenden Schulterkontur 37 bis zu dessen Kopfvorderende 38 erstreckt, liegt dann noch am durch den unteren Dichtungsring 26b gebildeten Ventilsitz an. Somit ist in dieser Stellung des Ventils 20 wiederum nur der erste Überströmkanal 30 freigegeben, dessen Durchlass wesentlich kleiner ist als der Durchlass des in Offenstellung des Ventils 20 freigegebenen, in dieser Darstellung nicht näher veranschaulichten zweiten Überströmkanals 31.

Während bei Freigabe des ersten Überströmkanals 30 lediglich ein geringer Volumenstrom über den Ringraum 32 und den Durchtrittskanal 25 sowie über den Verbindungskanal 24 zwischen den beiden Gehäuseräumen 4a und 4b infolge deren Druckunterschiedes geführt wird, ist aufgrund des vergleichsweise großen Durchlasses des bei geöffnetem Ventil 20 freigegebenen zweiten Überströmkanals 31 der Volumenstrom des Medium M vergleichsweise groß. Bei dieser Gasfeder-Variante ist als Mediums M zweckmäßigerweise Druckgas vorgesehen, während bei der Gasfeder-Variante nach den Fig. 2 bis 5 vorzugsweise mittels eines Gaskissens komprimiertes Öl eingesetzt ist.

Bei geöffnetem Ventil 20 ist - ebenso wie bei der in den Figuren 2 bis 5 dargestellten Gasfeder-Variante - der Kolben 6 axial verschiebbar, während dieser bei geschlossenem Ventil 20 blockiert ist. Bei sich öffnendem Ventil 20 und vorgespannter Gasfeder 1 wird der Kolben 6 innerhalb des Druckgehäuses 2 zunächst langsam in Richtung seiner Gleichgewichtsstellung geführt. Erst bei vollständig geöffnetem Ventil 20 wird der Kolben 6 über den verbleibenden Kolbenweg vergleichsweise schnell bis zur Gleichgewichtsstellung zurückgeführt.

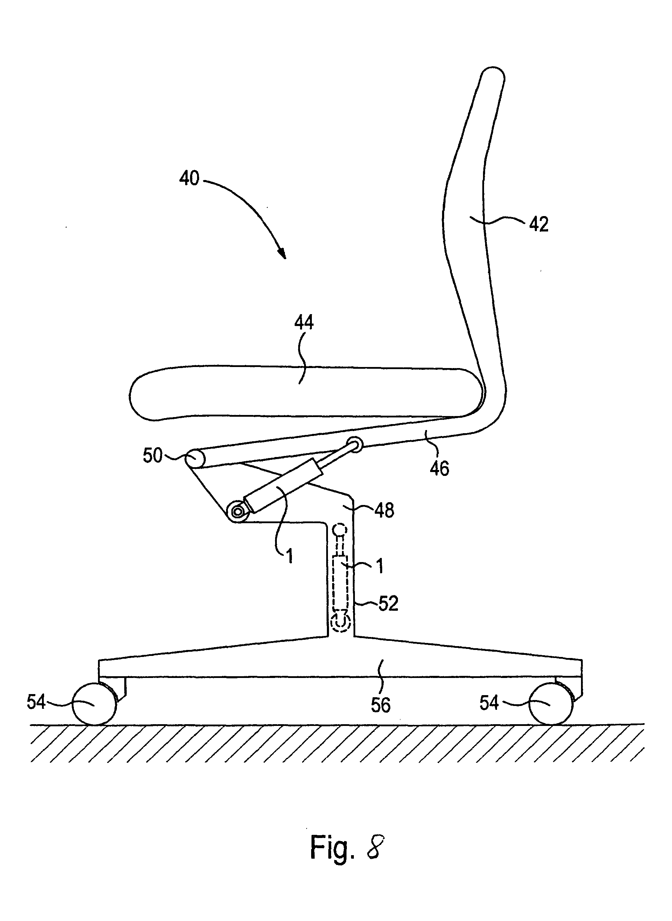

Die geringe Reibung im entriegelten Zustand der Gasfeder 1 einerseits sowie die sich während des Öffnens des Ventils 20 zunächst langsame Entspannung der Gasfeder 1 andererseits kombiniert zwei besonders vorteilhafte Eigenschaften der Gasfeder 1 in deren Verwendung als Federelement einer Synchronmechanik eines in Fig. 8 dargestellten Bürostuhls 40. Bei einem derartigen Stuhl 40 mit einer nicht näher bezeichneten Synchronmechanik zur Neigungsverstellung einer Rükkenlehne 42 ist diese über einen unterhalb einer Sitzfläche 44 verlaufenden Lehnenlenker 46 an einen Gestellständer 48 über ein Drehgelenk 50 schwenkbeweglich angelenkt. Der Gestellständer 48 ist Teil eines Drehgestells 52 mit einem mit Rollen 54 versehenen Gestellfuß 56. Die Gasfeder 1 ist einerseits - im Ausführungsbeispiel mit deren Druckgehäuse 2 - am Gestellständer 48 und andererseits mit der Kolbenstange 14 am Lehnenlenker 56 befestigt. Eine derartige Gasfeder 1 kann alternativ oder zusätzlich auch als Feder- und Einstellelement zur Höhenverstellung eingesetzt sein, wobei zur Höhenverstellung die Gasfeder-Variante nach Fig. 7 und zur Neigungsverstellung die Gasfeder-Variante nach den Figuren 2 bis 5 besonders geeignet ist.

Bei geöffnetem Ventil 20 und somit bei entriegelter Gasfeder 1 lässt sich die Rükkenlehne 42 nach hinten und unten verschwenken. Das Öffnen des Ventils 20 erfolgt infolge einer Druckausübung auf den Ventilstift 22 durch üblicherweise manuelle Betätigung über ein unterhalb der Sitzfläche 44 am Stuhl 40 vorgesehenes (nicht dargestelltes) Betätigungselement. Wird der Druck auf den Betätigungshebel und somit auf den Ventilstift 22 aufgehoben, so wird infolge des in dem dem Ventilstiftkopf 22a zugewandten Gehäuseraum 4b herrschenden Innendruck das Ventil 20 automatisch geschlossen und die Gasfeder 1 blockiert. Die Rückenlehne 42 verbleibt dann in der eingestellten Neigungsstellung.

Die Rückenlehne 42 schwenkt in die Aufrechtstellung und somit in die Ausgangsposition zurück, wenn das Ventil 20 erneut geöffnet wird. Der Öffnungsvorgang des Ventils 20 wird eingeleitet durch das Abheben des Ventilstiftkopfes 22a vom Ventilsitz 26a, wobei bereits ab diesem Zeitpunkt aufgrund der Freigabe des ersten, vergleichsweise kleinen Überströmkanals 30 eine langsame Entspannung der Gasfeder 1 erfolgt. Erst wenn durch Verschieben des Ventilstiftes 22 in Längsrichtung L,16 der Ventilstiftkopf 22a den Ventilkanal 24 bis zur Freigabe des zweiten, vergleichsweisen großen Überströmkanals 31 durchfahren hat, erfolgt eine vollständige Entspannung der Gasfeder 1. Zu diesem Zeitpunkt ist jedoch die Gasfeder 1 bereits zumindest teilweise entspannt. Die Rückstellkraft der Gasfeder 1 ist somit bei vollständig geöffnetem Ventil 20 bereits derart gering, dass keine impulsartige Rückstellung der Rückenlehne 42 in die Ausgangsposition erfolgen kann, zumal die Rückenlehne 42 die Ausgangsposition zu diesem Zeitpunkt bereits zumindest annähernd erreicht hat. Die Wirkung und die Funktionsweise der zur Höhenverstellung eingesetzten Gasfeder 1 ist analog.

Das über den Ventilstift 22 mit dem Ventil 20 gekoppelte Betätigungselement zur manuellen Betätigung der Gasfeder 1 für eine Neigungsverstellung ist in nicht näher dargestellter Art und Weise in Form eines Schiebers ausgeführt, der entlang eines relativ langen Weges geführt wird. Eine derartige Schiebebewegung ist vorteilhaft, um eine Untersetzung in der Kuppelstelle zwischen dem Betätigungselement und dem Ventilstift 22 zu vermeiden. Die infolge des über den ersten Überströmkanal 30 bewirkten vergleichsweise kleinen Durchlasses nur langsame Entspannung der Gasfeder 1 erfolgt somit bereits während der Schiebebewegung des Betätigungselements, bevor dieses in einer Arretierstellung den zweiten Überströmkanal und damit den vergleichsweise großen Durchlass ermöglicht. Der Betätigungsschieber wird vorzugsweise in der Sitzebene von der Sitzvorderkante zur Sitzhinterkante bewegt. Ein möglichst langer Schiebeweg ist somit von Vorteil.

In nicht näher dargestellter Art und Weise wird zweckmäßig beim Betätigen der Gasfeder 1 mittels des Betätigungsschiebers dieser gegen die Kraft einer Feder in Entriegelungsstellung geführt. Dadurch wird die Gasfeder 1 wieder blockiert, wenn der Betätigungsschieber nicht vollständig in die Arretierstellung geführt worden ist.

### Bezugszeichenliste

- 1: Gasfeder
- 2: Druckgehäuse
- 2a: Außenzylinder
- 2b: Innenzylinder
- 3: Boden
- 3a: Befestigungselement
- 3b: Führung
- 4: Gehäuseinnenraum
- 4a,b: Gehäuseraum
- 5: Dichtungsring
- 6: Kolben
- 6a: Kolbenscheibe
- 6b: Ansatz
- 7: Haltering
- 8: Dichtring
- 9: Vertiefung
- 10: Gehäuseinnenwand
- 11: Dichtung
- 12: Ringraum
- 14: Kolbenstange
- 16: Längsachse
- 18: Hohlraum
- 19: Betätigungsstange
- 20: Ventil/-Einrichtung
- 21: Ventilkörper
- 22: Ventilstift
- 22a: Ventilstiftkopf/Dämpfungs-Abschnitt
- 22b: Einschnürungs-/Überbrückungs-Abschnitt
- 22c: Führungs-Abschnitt
- 22d: Ventil-Teller
- 23: Dichtungsring
- 24: Ventilkanal
- 25a,b: Durchtrittskanal
- 26a,b: Dichtungsring
- 27: Öffnungsrichtung
- 28: Wandung
- 29: Mündungsöffnung
- 29': Öffnung
- 30: erster Überströmkanal
- 31: zweiter Überströmkanal
- 32: Ringkanal
- 33: Dichtungsring
- 34: Außengewinde
- 35: Zylinderschaft
- 36: Öffnung
- 37: Schulterkontur
- 38: Kopfvorderende
- 40: Stuhl
- 42: Rückenlehne
- 44: Sitzfläche
- 46: Lehnenlenker
- 48: Gestellständer
- 50: Drehgelenk
- 52: Drehgestell
- 54: Rolle
- 56: Gestellfuß
- 60: Klemmring
- 61: Füllstück
- 62: Führungsbüchse
- 63: Dichtfläche
- 64: Ringkanal
- 65: erster Auslöseweg
- 66: zweiter Auslöseweg
- 67: Ringspalt
- 68: dritter Auslöseweg
- 69: vierter Auslöseweg
- 70: Ringbund
- A: Zylinderhöhe
- a: Abstand/Ventilhub
- b: Kopflänge
- d: Zylinderdurchmesser
- L: Mittellängsachse
- M: Druckmedium

## Patentansprüche

**1.** Gasfeder (1) mit einem in einem Gehäuse (2) verschiebbaren Kolben (6), mit dem voneinander getrennte und mit einem Druckmedium (M) gefüllte Gehäuseräume (4a,4b) mittels einer Ventil-Einrichtung (20) miteinander verbindbar sind, die einen in einem Ventilkörper (21) verschiebbaren Ventilstift (22) aufweist,
dadurch gekennzeichnet,
dass die Ventil-Einrichtung (20,20') mindestens zwei Überströmkanäle (30,31) mit unterschiedlicher Drosselwirkung aufweist, die bei unterschiedlich weitem Einschieben des Ventil-Stiftes (22) gemeinsam oder nacheinander zur Wirkung kommen.

**2.** Gasfeder nach Anspruch 1,
dadurch gekennzeichnet,
dass die Ventil-Einrichtung (20) einen ersten Überströmkanal (30) mit vergleichsweise großer Drosselwirkung aufweist, dessen Durchlass kleiner ist als der Durchlass des in Offenstellung der Ventil-Einrichtung (20) freigegebene zweiten Überströmkanals (31) mit vergleichsweise geringer Drosselwirkung, wobei der Ventilstift (22) beim Öffnen der Ventil-Einrichtung (20) zunächst lediglich den ersten Überströmkanal (30) freigibt.

**3.** Gasfeder nach Anspruch 1 oder 2,
dadurch gekennzeichnet,
dass der Ventilstift (22) zwischen einem ersten Auslöseweg (65) und einem dritten Auslöseweg (68), in dem der zweite Überströmkanal (31) mit vergleichsweise geringer Drosselwirkung wirksam ist, über einen zweiten Auslöseweg (66) verschiebbar ist, über den die Drosselwirkung von großer Drosselwirkung auf geringe Drosselwirkung abnimmt.

**4.** Gasfeder nach einem der Ansprüche 1 bis 3,
dadurch gekennzeichnet,
dass die Überströmkanäle (30,31) parallel zueinander angeordnet sind und beim Einschieben des Ventilstiftes (22) nacheinander mit einer im Kolben (6) vorgesehenen Öffnung (29') verbindbar sind, über die die über mindestens einen der Überströmkanäl (30,31) mit dem einen Gehäuseraum (4a) verbundene Ventil-Einrichtung (20) mit dem anderen Gehäuseräume (4b) verbunden ist.

**5.** Gasfeder nach einem der Ansprüche 1 bis 4,
dadurch gekennzeichnet,
dass im Ventilkörper (21) zwei zueinander beabstandete Dichtelemente (26a,26b) vorgesehen sind, wobei der Überströmkanal (30) mit vergleichsweise großer Drosselwirkung zwischen den Dichtelementen (26a,26b) in den Überströmkanal (31) vergleichsweise geringer Drosselwirkumg einmündet.

**6.** Gasfeder nach Anspruch 5,
dadurch gekennzeichnet,
dass die Ventil-Einrichtung (20) eine erste Dichtung (26b) aufweist, die lediglich in der Schließstellung der Ventil-Einrichtung (20) dichtend am Ventilstift (22) anliegt, wobei der Überströmkanal (30) mit vergleichsweise großer Drosselwirkung in Einschubrichtung (27) des Ventilstiftes (22) vor der Dichtung (26b) in eine im Kolben (6) vorgesehene Öffnung (29') einmündet.

**7.** Gasfeder nach Anspruch 5 oder 6,
dadurch gekennzeichnet,
dass die Ventil-Einrichtung (20) eine zweite Dichtung (26a) aufweist, die in Einschubrichtung (27) vor dem Überströmkanal (30) mit vergleichsweise großer Drosselwirkung angeordnet ist, und die beim Verschieben des Ventilstiftes (22) einen Ringspalt (67) freigibt, der den Überströmkanal (31) mit vergleichsweise geringer Drosselwirkung mit der Öffnung (29') verbindet.

**9.** Gasfeder nach einem der Ansprüche 5 bis 8,
dadurch gekennzeichnet,
dass der Ventilstift (22) einen zylindrischen Dämpfungs-Abschnitt (22a) aufweist, an dem zumindest über einen Teil des Auslöseweges (65) des Ventilstiftes (22) die dem Überströmkanal (30) mit vergleichsweise großer Drosselwirkung vorgeordnete Dichtung (26a) anliegt, und dem ein eingeschnürter Überbrückungs-Abschnitt (22b) vorgeordnet ist, mit dem die Dichtung (26a) während eines zweiten und dritten Auslöseweges (66 bzw. 68) in Überdeckung gelangt.

**10.** Gasfeder nach Anspruch 1,
dadurch gekennzeichnet,
dass der Ventilstift (22) einen zylindrischen Dämpfungs-Abschnitt (22a) aufweist, zwischen dem und einem ringbundartigen Gegenstück (70) sowohl in Schließstellung der Ventil-Einrichtung (20') als auch über einen ersten Auslöseweg (65) des Ventilstiftes (20) ein Überströmkanal (30) mit im Vergleich zum anderen Überströmkanal (31) größerer Drosselwirkung ausgebildet ist, wobei dem zylindrischen Dämpfungs-Abschnitt (22a) ein gegenüber diesem eingeschnürter Überbrückungs-Abschnitt (22b) vorgeordnet ist, mit dem das Gegenstück (70) während eines zweiten und dritten Auslöseweges (66 bzw. 68) des Ventilstiftes (22) in Überdeckung gelangt.

**11.** Gasfeder nach einem der Ansprüche 1 bis 10,
dadurch gekennzeichnet,
dass der Kolben (6) an einer Kolbenstange (14) endseitig gehalten ist.

**12.** Verwendung einer blockierbaren Gasfeder (1) nach einem der Ansprüche 1 bis 11 als Federelement einer Höhenverstellung und/oder einer Synchronmechanik eines Sitzmöbels (40), insbesondere eines Bürostuhls, zur Neigungsverstellung einer Rückenlehne (42) oder dieser in Einheit mit einem Sitz (44).

**13.** Stuhl, insbesondere Bürostuhl, mit einer blockierbaren Gasfeder (1) nach einem der Ansprüche 1 bis 11 als Federelement zur Höhenverstellung, wobei die Gasfeder (1) ein doppelzylindriges Druckgehäuse (2a,2b) aufweist, und wobei der Ventilstift (22) und eine endseitig den Kolben (6) haltende Kolbenstange (14) an gegenüberliegenden Stirnseiten der Gasfeder (1) nach außerhalb des Druckgehäuses (2) geführt sind.

**14.** Stuhl, insbesondere Bürostuhl, mit einer blockierbaren Gasfeder (1) nach einem der Ansprüche 1 bis 11 als Federelement zur Neigungsverstellung einer Rückenlehne (42) oder dieser in Einheit mit einem Sitz (44), wobei der Ventilstift (22) in der nach außerhalb des Druckgehäuses (2) geführten Kolbenstange (14) axial verschiebbar angeordnet ist.
